# EUROPEAN PATENT SPECIFICATION

(11) **EP 2 476 556 B1**
(45) Date of publication and mention of the grant of the patent: **11.12.2013**
(21) Application number: 11186330.4
(22) Date of filing: 24.10.2011
(51) Int. Cl.: B41J 3/407, H04N 1/60

(54) **An ink-jet printing system for use on rigid elements**
Ein Tintenstrahldrucksystem für den Gebrauch auf festen Elementen
Un système d'impression à jet d'encre à être utilisé sur des éléments rigides

(30) Priority: 13.01.2011 IT MI20110024
(43) Date of publication of application: 18.07.2012
(73) Proprietor: IN.TE.SA. S.p.A., 40026 Imola (Bologna) (IT)
(72) Inventor: Beltrami, Alessandro, 42021 Bibbiano (Reggio Emilia) (IT)
(74) Representative: Tansini, Elio Fabrizio

(56) References cited:
- EP-A2- 2 123 467
- JP-A- 2002 084 433
- US-A1- 2008 079 763

## Description

The present invention relates to an ink-jet printing system for use on rigid elements.

In particular, the present invention relates to an ink-jet printing system to be used on organic, inorganic and metallic rigid surfaces.

Still more particularly, these surfaces comprise ceramic, glass, plastic materials, wood, aluminium panels, flexible materials such as leather, made rigid through mechanical stretching or other systems such as coupling with rigid supports. In addition, according to the invention the surfaces are planar surfaces.

It is known that printing on rigid materials such as ceramic tiles, can be carried out using several different techniques.

In particular, in ink-jet printing a series of data in suitable digital format is provided to be supplied to the printing device, so that the device can carry out the desired printing.

It should be noted in this regard that in decorations of rigid elements using digital ink-jet printing technologies, a very different treatment of the digital files from that used with traditional methods is expected to be adopted.

In fact, the process is started with preparation of a "conceptual image", i.e. an image in digital format that, ideally, should be reproduced on the rigid element. Typically, the conceptual image is provided by a printing and engraving office, to which this type of activity is commissioned. The conceptual image can be prepared for example in RGB or CMYK format, chromatically described by a standard ICC (International Colour Consortium) colour profile such as sRGB, AdobeRGB (1998), Coated FOGRA 39, etc.

The digital data contained in the file have a colorimetric valence because, through the ICC profile, it is possible to convert the RGB or CMYK data into CIELAB (L*, a*, b*) co-ordinates. However, these digital data cannot be directly used for printing, because they have no relation with the tones used for rigid elements. These data therefore cannot be sent to the printer by which printing has to be carried out. Before the data are sent to the digital printer, they must be submitted to one or more conversions, so that they may suit the required digital format and the colorimetry developed from the pigments of a given configuration printed on a specific rigid element.

In case of processes involving a firing cycle, such as ceramic materials, these conversions must take into account the visual effects connected to the physicochemical conversions due to firing and the possible finishing with protective agents.

There are not unique methods for carrying out this conversion. Typically software and commercial methods resulting from ink-jet printing on paper are used, but the results cannot be optimised for the particular tones developed on rigid elements, in particular on ceramic materials.

Conversion from "conceptual" colorimetry to specific separation for a digital printing process (i.e. conversion from the starting digital format to a format that can be used with an ink-jet printer) should be carried out by the firm having full control of the process itself because, due to the great intrinsic variability, a constant and precise re-alignment of the digital data must be provided.

Conversion with traditional methods can take place by means of two alternative methodologies: separation by a four-colour process or separation in a multi-channel format also known as "multicolor" and hereinafter referred to as "xCLR" on the analogy of the ICC.1:2004-10 specifications.

Separation by a four-colour process, that is simpler, can be applied to those processes using 3 or 4 pigments that are similar from a colorimetric point of view to the subtractive colours Cyan, Magenta, Yellow and, optionally, Black.

The xCLR separation that is more complicated, can be applied to all processes of 3 to N colours, irrespective of their colorimetric representation. A three-colour process is named 3CLR, a six-colour process is named 6CLR, and so on.

The steps of a standard separation process into four colours of a new project are the following:
1. Testing of the printing conditions and testing of the system calibration.
2. Printing of a CMYK test diagram and subsequent firing.
3. Reading of the test diagram by spectrophotometer.
4. Creation of the ICC profile.
5. Control and standardisation of the input file.
6. Separation of the file into CMYK format with ICC profile created at step 4.
7. Control of the result on a monitor, possible chromatic corrections.
8. Sending of the data in CMYK format to the digital printer, with possible technical adjustments of the file format.

The steps of a standard separation process into xCLR of a new project are the following:
1. Testing of the printing conditions and testing of the system calibration.
2. Printing of a calibration test diagram.
3. Reading of the test diagram by a spectrophotometer as regards the colour spectrum of the solids and optionally as regards rendering of the tone value.
4. Generation of an xCLR test diagram optimised by the data detected at step 3, specific for the project.
5. Printing of the test diagram generated at step 4 and subsequent firing.
6. Reading of the test diagram by spectrophotometer.
7. Creation of the ICC profile.
8. Control and standardisation of the input file.
9. File separation into xCLR format by ICC profile created at step 7.
10. Control of the result on a monitor, possible chromatic corrections.
11. Sending of the data in xCLR format to the digital printer, with possible technical adjustments of the file format.

Although the present technology makes available the above described processes, very often the firms use empirical methods for carrying out these conversions. This is due to the fact that the four-colour separation method or xCLR contemplates an exact and efficient management and process control, that however is not always applied in the firm. In addition, the presently used systems are the result of applications in other sectors (the typographic industry, for example), which inevitably gives rise to complications in use and interaction with the user.

With reference to both mentioned methods, the four-colour and xCLR processes, the Applicant has found that a great professionalism and accuracy is required from the graphic operator implementing the separation process, due to different reasons:
- in both cases different systems and software are used for performing the steps of a single process, which inevitably gives rise to complications during data learning and interchange;
- the manual use of different systems for performing a single process increases the possibility of falling into careless mistakes;
- the different software settings are not usually stored by the traditional systems: therefore the operator is entrusted with the task of precisely noting, for each project, the settings requiring repetition;
- these software systems usually come from different producers, with different interfaces and often work on separated hardware platforms with waste of resources both in carrying out the process and in the system maintenance;
   - the management and organisation aspect of the generated files (original, reference and image test diagram, spectrophotometric readings, separated files, modifications, etc.) requires some organisation and codification of the file names, which is necessary for correctly supplying the firm production database;
- the operator has the possibility to retrieve the digital files related to all the process steps, therefore preventing the firm from implementing effective data processing safety policies;
- management in an environment made up of different graphic operators in a single firm contemplates accomplishment of different work sites with great storage and graphic processing capacities;
- the process thus managed by software and systems not connected with each other, prevents return of information on the quality control and possible automated management of the production variables.

Accordingly, it is an aim of the present invention to provide a system for ink-jet printing on rigid elements capable of solving the above mentioned drawbacks.

In particular, it is an aim of the present invention to make available a system that can be easily used also by operators that are not very skilled in the art. Another aim of the invention is to provide an automated system that greatly reduces the dependence of the setting and printing steps on the operator's sensitivity, so that the final result of the process is as much as possible similar to the expected one. Another aim of the invention is to make available a system enabling data processing safety measures to be effectively implemented with particular reference to the files processed during the printing preparation process.

A further aim of the invention is to provide a system in which the different files used for setting and printing can be managed and stored in an orderly and efficient manner.

The foregoing and further aims are substantially achieved by a system for ink-jet printing on rigid elements as described in the appended claims.

Further features and advantages will become more apparent from the detailed description of a preferred and not exclusive embodiment of the invention; in particular a system for ink-jet printing on ceramic materials will be described.

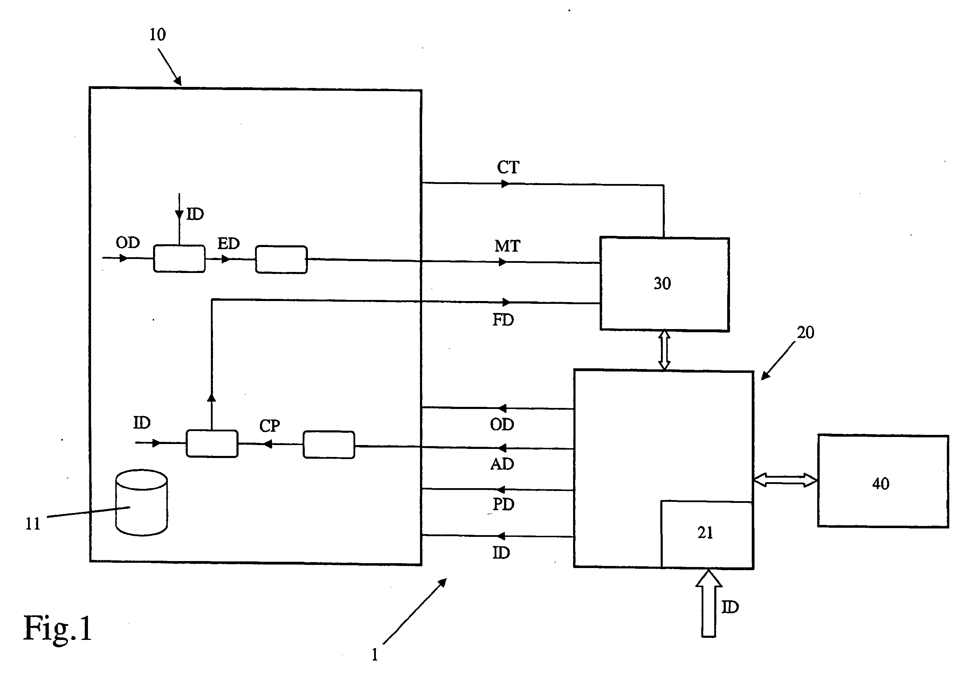

This description is given hereinafter with reference to the accompanying Fig. 1, given by way of non-limiting example too, in which a block diagram of the system in accordance with the invention is shown.

It will be recognised that the following description can be also more generally referred to organic, inorganic and metallic rigid surfaces, in particular planar surfaces such as, for example, plastic materials, woods, aluminium panels, flexible materials like leather made stiff by mechanical stretching or other systems, coupling with stiff supports for example.

A system for ink-jet printing on ceramic materials in accordance with the present invention has been generally identified with reference numeral 1.

System 1 first of all comprises a server apparatus 10 configured for processing data related to printing to be carried out, through ink-jet printing technology, on ceramic items or objects.

As better clarified in the following, the server apparatus 10 is entrusted with the task of substantially carrying out all operations for print preparation, stating the parameters to be sent to the printing device so that the final result is as much as possible close to the theoretically expected result. System 1 further comprises a client apparatus 20 connected to said server apparatus 10.

Connection between the server apparatus 10 and client apparatus 20 can preferably be of the remote type. By way of example, connection between server 10 and client 20 can be obtained through the Internet. In a preferred embodiment, the client apparatus 20 has access to the server apparatus 10 through R.I.A. (Rich Internet Application) technology.

The client apparatus 20 has different functions.

First, it enables an operator to interact with the system, for example for the purpose of inputting data relating to the printing that is wished to be carried out, and for the purpose of enabling the operator to display the print previews. To this aim, the client apparatus 20 is provided with a user interface 21 better described in the following.

For carrying out the prints required by the user, system 1 comprises one or more printing devices 30, connected to said server apparatus 10.

The printing device 30 is an ink-jet printer, provided for printing on rigid elements, in particular ceramic materials, such as tiles for example.

The client apparatus 20 is further connected to an optical reading device 40 for detecting operating data representative of the test prints that will be executed (the so-called "test diagram").

The reading device 40 is preferably a spectrophotometer.

As mentioned above, the client apparatus 20 is provided with at least one user interface 21 configured at least for enabling an operator to input initial data ID representative of at least one image to be printed. In other words, the client apparatus 20, obtained by means of a suitably programmed electronic computer, gives the operator the availability of all hardware and software instruments for inputting to the system the image that has to be printed on the rigid element, in particular the ceramic material.

This image may comprise inscriptions and/or graphic decorations.

Generally, the image to be printed is made up of one or more coloured portions. The processing operation carried out by the server apparatus 10 acts in such a manner that the image that is actually printed on the ceramic material is substantially identical, above all in terms of chromatic rendering, to the image inputted by the operator.

The image identified by the aforesaid initial data ID is preferably in RGB format, or in CMYK format. Generally, any format describing a graphic image can be used.

Preferably the initial data ID can also comprise data representative of the tile on which printing has to be done; for instance, data representative of the sizes of the tile itself can be inputted by the operator.

The initial data ID can also comprise parameters defining a shrinkage percentage of the tile during firing. This parameter is useful to make the printing device take into due consideration the tile size variations.

The initial data can also comprise other data that will be better described in the following.

The client apparatus 20 will send the server apparatus 10 the initial data ID.

Depending on these initial data ID, the server apparatus 10 will generate a calibration test diagram CT, i.e. a series of data to enable the printing device 30 to carry out a test print following determined specifications.

Preferably, the calibration test diagram CT can be generated as a function of the following parameters:
- format of a tile on which printing has to be carried out;
- shrinkage percentage of said tile during firing;
- type of reading device 40;
- number of channels used;
- allowed/unallowed combination grid for said channels.

By the term "channel" it is intended the assembly of circuits and printheads of device 30 that supervises a single ink. From the point of view of server 10, a channel is therefore associated with a specific circuit. A channel always manages a single ink, while a configuration of the printing device 30 where one ink is present in several channels is possible. Advantageously, these data are stored in a memory 11 being part of the server apparatus 10, so that the latter can process these data in a suitable manner.

Preferably, stored in memory 11 is at least the number of channels used.

Preferably, in memory 11, for each channel, the following data are stored:
- identification code or name;
- indicative colour, preferably in the form of CIELAB or CIEXYZ co-ordinates;
- dynamic interval with minimum and maximum percentage. By "dynamic interval" it is intended the colorimetric ratio for each channel between the darkest colour that can be obtained and the substrate. The minimum reproducible percentage referred to a percentage of a single channel as stated in the digital file transferred from server 10 to the printing device 30, is the one generating a difference that can be detected in a colorimetric manner with the unprinted substrate. The maximum percentage, by analogy is that generating a difference that can be detected in a colorimetric manner with the 100% covered substrate of the same channel.

Preferably, one or more data stored in memory 11 are supplied by the client apparatus 20 and are included in the initial data ID.

In other words, the above mentioned data stored in memory 11 can be partly or fully inputted by the operator through the user interface 21.

Preferably, the calibration test diagram CT is generated as a function of one or more data stored in said memory 11.

In greater detail, the calibration test diagram comprises the following portions:
- substrate;
- for each channel:
   - value representative of 100%, with redundancy due to the average of the spectrophotometric readings, in which 100% represents the maximum ink amount that the system is able to deposit for each individual channel. The redounding allows a statistical mean to be carried out in order to mitigate possible process variabilities;
   - scale values (5% - 10% - 25% - 50% - 75% - 90%) for calculating TVI and/or ΔE parameters cumulatively; using these percentages, referred to the digital file that server 10 sends to the printing device 30, it is possible to trace the tone curve of each individual channel. The methods for drawing this curve can be different, among which the method based on the TVI (Tone Value Increase) as described in ISO/TS 10128, the method based on the NPDC (Neutral Print Density Curve) as specified by system G7™ from IdeaAlliance, or other systems;
- 100% channel combinations taken in allowed pairs, i.e. pairs that the user, by means of the information decided through client 20, indicates as being allowable;
- 100% channel combinations taken in allowed groups of three.

The calibration test diagram CT is then sent from the server apparatus 10 to the printing device 30, together with the necessary commands so that the printing device 30 carries out printing of the calibration test diagram CT on a ceramic object. By way of example, the ceramic object can be a ceramic tile, quite similar to the tiles on which the final printing of the image initially inputted by the user will be carried out. Once the calibration test diagram CT has been printed by the printing device 30, the results of this printing are detected by the optical reading device 40. In particular, the optical reading device 40 detects operating data OD representative of the print of the calibration test diagram CT.

The operating data OD are sent from the client apparatus 20 connected to the optical reading device 40, to the server apparatus 10.

The server apparatus 10 will generate, as a function of the operating data OD and the initial data ID, an xCLR test diagram MT.

In greater detail, the server apparatus 10 is configured for generating, as a function of the initial data ID and the operating data OD, the following processing parameters or elaboration data ED:
- spectral curve of the substrate and the 100% individual channels;
- data representative of the reproduction homogeneity;
- dynamic range of use of each individual channel;
- calibration curve of the system, as a function of said dynamic ranges;
- combination of colours, in groups of two and/or in groups of three, to be eliminated;
- maximum black point, defined as a function of the allowed combinations of two and/or three colours;
- maximum threshold for inking
- provisional colour profile.

Depending on these processing parameters ED, the server apparatus 10 generates the xCLR test diagram MT. Practically, the xCLR test diagram MT constitutes a further print test, to be carried out and analysed for further refining the knowledge of the system features and therefore determining how to carry out in an optimal manner the final printing of the image initially inputted by the user.

The xCLR test diagram MT is sent from the server apparatus 10 to the printing device 30, so that said printing device 30 will carry out printing of the xCLR test diagram MT on a ceramic object. Preferably, this ceramic object is a ceramic tile, quite similar to those that will be used for final prints. Advantageously, for printing of the xCLR test diagram MT the same ceramic object as used for printing of the calibration test diagram CT can be used.

After the print of the xCLR test diagram MT has been carried out, auxiliary data AD representative of this print are detected by means of the optical reading device 40.

The client apparatus 20 will send these auxiliary data AD to the server apparatus 10.

Depending on the auxiliary data AD, the server apparatus 10 is configured for generating a conversion profile CP for the printing device 30.

Preferably, the conversion profile CP is a profile of the ICC (International Colour Consortium) type as specified by ISO 15076.

Preferably, the conversion profile CP is also generated as a function of production data and/or colorimetric data PD detected in carrying out the previous prints. Through the conversion profile CP thus determined, the server apparatus 10 can therefore convert the initial data ID into final print data FD.

The final data FD can be supplied to the printing device 30, so that the latter can carry out the final print of the initially inputted image.

In this manner, the final print is carried out not only as a function of the initial data ID initially inputted by the operator through the user interface 21, but also as a function of the conversion profile PC, determined according to the features of the printing device 30 and the specific material on which the print has to be carried out.

System 1 advantageously comprises a plurality of client apparatuses 20 associated with the server apparatus 10. Advantageously, the apparatus 10 can also comprise a plurality of printing devices 30.

Preferably, the number of client apparatuses 20 is independent of the number of printing devices 30. Therefore, through a single server apparatus 10 it is possible to manage an even high number of client apparatuses 20, and also a high number of prints carried out by the printing devices 30.

The invention achieves important advantages.

First of all, the system according to the invention can be easily used also by operators that are not very skilled in the art.

In addition, the system herein described and claimed greatly reduces the dependence of the setting and printing steps on the operator's sensitivity and the final result of the process is therefore substantially identical with the expected one.

Another advantage is found in that, in the system in accordance with the invention, it is possible to efficiently implement data processing safety systems, with particular reference to the files processed during the printing preparation steps.

A further advantage resides in that the system of the invention enables the different files used for setting and printing to be managed and stored in an orderly and efficient manner.

## Claims

1. An ink-jet printing system for use on rigid elements, comprising:
- a server apparatus (10) configured for processing data related to an ink-jet printing on stiff elements;
- one or more client apparatus (20) connected to said server apparatus (10);
- one or more ink-jet printing devices (30), for printing on rigid elements;
wherein:
- said client apparatus (20) is provided with a user interface (21) configured for enabling an operator to input initial data (ID) representative of at least one image to be printed;
- said server apparatus (10) is configured for receiving said initial data (ID) from the client apparatus (20) and generating a calibration test diagram (CT) as a function of said initial data;
- said server apparatus (10) is configured for sending data contained in the calibration test diagram (CT) to said printing device (30) thus obtaining the print of said calibration test diagram on a rigid element;
- said client apparatus (20) is associated with an optical reading device (40) for detecting operating data (OD) representative of the print of said calibration test diagram (CT) on said rigid element;
- said server apparatus (10) is configured for receiving said operating data (OD) from said client apparatus (20);
- said server apparatus (10) is further configured for generating an xCLR test diagram (MT) as a function of said operating data (OD) and said initial data (ID);
- said printing device (30) is configured for receiving said xCLR test diagram (MT) from said server apparatus (10), for a print on a rigid element;
- said client apparatus (20) co-operates with said optical reading device (40) for detecting auxiliary data (AD) representative of the print of said xCLR test diagram (MT) on said rigid element;
- said server apparatus (10) is configured for receiving said auxiliary data (AD) and generating a conversion profile (CP) for said printing device (30) as a function of said auxiliary data (AD);
- said server apparatus (10) is further configured for converting, through said conversion profile (CP), said initial data (ID) into final print data (FD) for said printing device (30);
- said server apparatus (10) is configured for controlling said printing device (30) as a function of said final print data (FD), for printing an image identified by said initial data (ID) on a rigid element.

2. A system as claimed in claim 1, wherein said client apparatus (20) is configured for receiving production and/or colorimetric data (PD) from said printing device (30), and sending said data to the server apparatus (10).

3. A system as claimed in claim 2, wherein said server apparatus (10) is configured for generating said conversion profile (CP) also as a function of production and/or colorimetric data (PD) detected in carrying out previous prints.

4. A system as claimed in anyone of the preceding claims, wherein said conversion profile (CP) is an ICC profile.

5. A system as claimed in anyone of the preceding claims, wherein said optical reading device (40) is a spectrophotometer.

6. A system as claimed in anyone of the preceding claims, wherein said server apparatus (10) is provided with a memory (11), in which one or more than one of the following data are stored:
- format of a tile on which printing is to be carried out;
- percent shrinkage of said tile during firing;
- type of reading device (40);
- number of channels used;
- allowed/unallowed combination grid for said channels.

7. A system as claimed in the preceding claim, wherein stored in said memory (11) is at least the number of said channels used,for each channel, in said memory (11) the following data being further stored:
- identification code or name;
- indicative colour, preferably in the form of CIELAB or CIEXYZ co-ordinates;
- dynamic interval with minimum and maximum percentages.

8. A system as claimed in claim 6 or 7, wherein more than one of the data stored in said memory (11) are supplied by said client apparatus (20) and are included in said initial data (ID).

9. A system as claimed in anyone of claims 6 to 8, wherein said calibration test diagram (CT) is generated as a function of one or more data stored in said memory (11).

10. A system as claimed in anyone of the preceding claims, wherein said calibration test diagram (CT) comprises the following portions:
- substrate;
- for each channel:
· a value representative of the maximum ink amount that the system succeeds in depositing for each individual channel;
· scale values at different percentages, for tracing the tone curve of each individual channel;
- 100% channel combination, with channels taken in allowed pairs;
- 100% channel combination, with channels taken in allowed groups of three.

11. A system as claimed in anyone of the preceding claims, wherein said server apparatus (10) is configured for generating the following processing parameters or elaboration data (ED) as a function of said initial data (ID) and operating data (OD):
- spectral curve of the substrate and 100% individual channels;
- data representative of the reproduction homogeneity;
- dynamic range of use of each individual channel;
- calibration curve of the system, as a function of said dynamic ranges;
- combination of colours, in groups of two and/or in groups of three, to be eliminated;
- maximum black point, defined as a function of the allowed combinations of two and/or three colours;
- maximum threshold for inking;
- provisional colour profile,
said server apparatus (10) being configured for determining said xCLR test diagram (MT) as a function of said processing parameters (ED).

12. A system as claimed in anyone of the preceding claims, wherein said rigid elements comprise one or more among organic, inorganic or metallic rigid surfaces.

13. A system as claimed in claim 12, wherein said surfaces comprise ceramic and glass materials or the like.

14. A system as claimed in claim 12, wherein said rigid elements comprise flexible surfaces such as leather, made rigid through mechanical stretching or other systems such as coupling with rigid supports.

15. A system as claimed in anyone of claims 13 or 14, wherein said surfaces are planar surfaces.

## Patentansprüche

1. Tintenstrahldrucksystem für den Gebrauch auf festen Elementen, umfassend:
- ein Servergerät (10), eingerichtet zur Verarbeitung von Daten, die sich auf ein Tintenstrahldrucken auf festen Elementen beziehen;
- ein oder mehrere Clientgeräte (20), verbunden mit dem Servergerät (10);
- ein oder mehrere Tintenstrahldruckvorrichtungen (30) zum Drucken auf festen Elementen;
wobei:
- das Clientgerät (20) mit einer Benutzeroberfläche (21) ausgestattet ist, eingerichtet, um einem Bediener die Eingabe anfänglicher Daten (ID), die repräsentativ für mindestens ein zu druckendes Bild sind, zu ermöglichen;
- das Servergerät (10) eingerichtet ist, um diese anfänglichen Daten (ID) vom Clientgerät (20) zu empfangen und ein Kalibrierungstestdiagramm (CT) als eine Funktion dieser anfänglichen Daten zu generieren;
- das Servergerät (10) eingerichtet ist, um im Kalibrierungstestdiagramm (CT) enthaltene Daten an die Druckvorrichtung (30) zu übermitteln, um den Druck des Kalibrierungstestdiagramms auf einem festen Element zu erhalten;
- das Clientgerät (20) mit einem optischen Lesegerät (40) verbunden ist, um Betriebsdaten (OD) zu erfassen, die repräsentativ für den Druck des Kalibrierungstestdiagramms (CT) auf dem festen Element sind;
- das Servergerät (10) eingerichtet ist, um diese Betriebsdaten (OD) vom Clientgerät (20) zu empfangen;
- das Servergerät (10) ferner eingerichtet ist, um ein xCLR-Testdiagramm (MT) als eine Funktion dieser Betriebsdaten (OD) und der anfänglichen Daten (ID) zu generieren;
- die Druckvorrichtung (30) eingerichtet ist, um dieses xCLR-Testdiagramm (MT) vom Servergerät (10) für einen Druck auf einem festen Element zu empfangen;
- das Clientgerät (20) mit einem optischen Lesegerät (40) kooperiert, um Hilfsdaten (AD), die repräsentativ für den Druck des xCLR-Testdiagramms (MT) auf dem festen Element sind, zu erfassen;
- das Servergerät (10) eingerichtet ist, um diese Hilfsdaten (AD) zu empfangen und ein Konvertierungsprofil (CP) für die Druckvorrichtung (30) als eine Funktion der Hilfsdaten (AD) zu generieren;
- das Servergerät (10) ferner eingerichtet ist, um die anfänglichen Daten (ID) mittels des Konvertierungsprofils (CP) in abschließende Druckdaten (FD) für die Druckvorrichtung (30) zu konvertieren;
- das Servergerät (10) ferner eingerichtet ist, um die Druckvorrichtung (30) als eine Funktion dieser abschließenden Druckdaten (FD) zu steuern, um ein Bild, das durch diese anfänglichen Daten (ID) identifiziert ist, auf einem festen Element zu drucken.

2. System nach Anspruch 1, wobei das Clientgerät (20) eingerichtet ist, um Produktions- und/oder kolorimetrische Daten (PD) von der Druckvorrichtung (30) zu empfangen und diese Daten an das Servergerät (10) zu übermitteln.

3. System nach Anspruch 2, wobei das Servergerät (10) eingerichtet ist, um das Konvertierungsprofil (CP) auch als eine Funktion der bei der Durchführung vorheriger Drucke erfassten Produktions- und/oder kolorimetrischen Daten (PD) zu generieren.

4. System nach einem der vorhergehenden Ansprüche, wobei es sich beim Konvertierungsprofil (CP) um ein ICC-Profil handelt.

5. System nach einem der vorhergehenden Ansprüche, wobei es sich beim optischen Lesegerät (40) um ein Spektrophotometer handelt.

6. System nach einem der vorhergehenden Ansprüche, wobei das servergerät (10) mit einem Speicher (11) ausgestattet ist, in dem ein oder mehrere der folgenden Daten gespeichert werden ;
- Format einer Platte, auf der der Druck ausgeführt wird;
- Schrumpfungsanteil dieser Platte beim Brennen;
- Art des Lesegeräts (40);
- Zahl der genutzten Kanäle;
- zulässiges/unzuläsziges Kombinationsraster für diese Kanäle.

7. System nach einem der vorhergehenden Ansprüche, wobei im Speicher (11) mindestens die Zahl der genutzten Kanäle gespeichert wird und für jeden Kanal im Speicher (11) ferner die folgenden Daten gespeichert werden:
- Kenncode oder Name;
- Richtfarbe, vorzugsweise in der Form von CIELAB- oder CIEXY2-Koordinaten;
- dynamisches Intervall mit Mindest- und Höchstanteilen.

8. System nach Anspruch 6 oder 7, wobei mehr als einer der im Speicher (11) gespeicherten Daten vom Clientgerät (20) geliefert wird und in den anfänglichen Daten (ID) eingeschlossen ist.

9. System nach einem der Ansprüche 6 bis 8, wobei das Kalibrierungstestdiagramm (CT) als eine Funktion von einem oder mehreren im Speicher (11) gespeicherten Daten generiert wird.

10. System nach einem der vorhergehenden Ansprüche, wobei das Kalibrierungstestdiagramm (CT) folgende Abschnitte umfasst:
- Substrat;
- für jeden Kanal:
einen Wert, der für die maximale Tintenmenge repräsentativ ist, die das System für jeden individuellen Kanal aufbringen kann;
Skalenwerte bei unterschiedlichen Anteilen, um die Farbtiefenkurve jedes einzelnen Kanals aufzuzeichnen;
- 100 % Kanalkombination mit Kanälen, die in zulässigen Paaren eingesetzt werden;
- 100 % Kanalkombination mit Kanälen, die in zulässigen Dreiergruppen eingesetzt werden.

11. System nach einem der vorhergehenden Ansprüche, wobei das Servergerät (10) eingerichtet ist, um die folgenden Verarbeitungsparameter oder Verarbeitungsdaten (ED) als eine Funktion der anfänglichen Daten (ID) und der Betriebsdaten (OD) zu generieren:
- Spektralkurve des Substrats und 100 % der individuellen Kanäle;
- Daten, die repräsentativ für die Einheitlichkeit der Reproduktion sind;
- dynamischer Nutzungsbereich jedes einzelnen Kanals;
- Kalibrierungskurve des Systems als eine Funktion der dynamischen Bereiche;
- Farbkombinationen in Zweier- und/oder Dreiergruppen, die zu beseitigen sind;
- maximaler Schwarzpunkt, definiert als eine Funktion der zulässigen Kombinationen von zwei und/oder drei Farben;
- maximale Schwelle für die Druckfarbenabgabe;
- provisorisches Farbprofil,
wobei das Servergerät (10) eingerichtet ist, um das xCLR-Testdiagramm (MT) als eine Funktion dieser Verarbeitungsparameter (ED) zu ermitteln.

12. System nach einem der vorhergehenden Ansprüche, wobei die festen Elemente eine oder mehrere organische, anorganische oder metallische feste Oberflächen umfassen.

13. System nach Anspruch 12, wobei diese Oberflächen Keramik- und Glasmaterialien oder Ähnliches umfassen.

14. System nach Anspruch 12, wobei die festen Elemente flexible Oberflächen wie Leder umfassen, die mittels mechanischen Streckens oder anderer Systeme wie der Verbindung mit festen Untergründen fest gemacht wurden.

15. System nach Anspruch 13 oder 14, wobei es sich bei diesen Oberflächen um plane Oberflächen handelt.

## Revendications

1. Système d'impression à jet d'encre à être utilisé sur des éléments rigides, comprenant :
- un appareil serveur (10) configuré pour traiter les données relatives à une impression à jet d'encre sur des éléments rigides ;
- un ou plusieurs appareils clients (20) reliés au dit appareil serveur (10) ;
- un ou plusieurs dispositifs d'impression à jet d'encre (30) permettant l'impression sur des éléments rigides ;
dans lequel :
- ledit appareil client (20) est pourvu d'une interface utilisateur (21) configurée pour permettre à un opérateur d'entrer des données initiales (ID) représentatives d'au moins une image à imprimer ;
- ledit appareil serveur (10) est configuré pour recevoir lesdites données initiales (ID) de l'appareil client (20) et générer un diagramme d'essai d'étalonnage (CT) en fonction desdites données initiales ;
- ledit appareil serveur (10) est configuré pour envoyer les données contenues dans le diagramme d'essai d'étalonnage (CT) au dit dispositif d'impression (30) pour obtenir ainsi l'impression dudit diagramme d'essai d'étalonnage sur un élément rigide ;
- ledit appareil client (20) est associé à un dispositif de lecture optique (40) pour détecter les données de fonctionnement (OD) représentatives de l'impression dudit diagramme d'essai d'étalonnage (CT) sur ledit élément rigide ;
- ledit appareil serveur (10) est configuré pour recevoir lesdites données de fonctionnement (OD) à partir dudit appareil client (20) ;
- ledit appareil serveur (10) est de plus configuré pour générer un diagramme d'essai xCLR (MT) en fonction desdites données de fonctionnement (OD) et desdites données initiales (ID) ;
- ledit dispositif d'impression (30) est configuré pour recevoir ledit diagramme d'essai xCLR (MT) dudit appareil serveur (10) pour réaliser une impression sur un élément rigide ;
ledit appareil client (20) coopère avec ledit dispositif de lecture optique (40) pour détecter des données auxiliaires (AD) représentatives de l'impression dudit diagramme d'essai xCLR (MT) sur ledit élément rigide ;
- ledit appareil serveur (10) est configuré pour recevoir lesdites données auxiliaires (AD) et générer un profil de conversion (CP) pour ledit dispositif d'impression (30) en fonction desdites données auxiliaires (AD) ;
- ledit appareil serveur (10) est de plus configuré pour convertir, par le biais dudit profil de conversion (CP), lesdites données initiales (ID) en des données d'impression finales (FD) pour ledit dispositif d'impression (30) ;
- ledit appareil serveur (10) est configuré pour commander ledit dispositif d'impression (30) en fonction desdites données d'impression finales (FD), pour imprimer une image, identifiée par lesdites données initiales (ID), sur un élément rigide.

2. Système selon la revendication 1, dans lequel ledit appareil client (20) est configuré pour recevoir des données de production et/ou colorimétriques (PD) dudit dispositif d'impression (30) et envoyer lesdites données l'appareil serveur (10).

3. Système selon la revendication 2, dans lequel ledit appareil serveur (10) est configuré pour générer ledit profil de conversion (CP) aussi en fonction des données de production et/ou colorimétriques (PD) détectées lors d'impressions réalisées précédemment.

4. Système selon l'une quelconque des revendications précédentes, dans lequel ledit profil de conversion (CP) est un profil ICC.

5. Système selon l'une quelconque des revendications précédentes, dans lequel ledit dispositif de lecture optique (40) est un spectrophotomètre.

6. Système selon l'une quelconque des revendications précédentes, dans lequel ledit appareil serveur (10) est pourvu d'une mémoire (11), dans laquelle l'une ou plus d'une des données suivantes sont stockées :
- format d'une dalle sur laquelle l'impression sera effectuée ;
- pourcentage du retrait de ladite dalle lors de la cuisson ;
- type de dispositif de lecture (40) ;
- nombre de canaux utilisés ;
- grille de combinaisons autorisées / interdites pour lesdits canaux.

7. Système selon la revendication précédente, dans lequel est au moins stocké, dans ladite mémoire (11), le nombre desdits canaux utilisés et mais aussi pour chaque canal sont stockées, dans ladite mémoire (11), les données suivantes :
- code d'identification ou nom ;
- couleur indicative, de préférence sous la forme de coordonnées CIELAB ou CIEXYZ ;
- intervalle dynamique avec les pourcentages minimum et maximum.

8. Système selon les revendications 6 ou 7, dans lequel plus d'une des données stockées dans ladite mémoire (11) est fournie par ledit appareil client (20) et est incluse dans lesdites données initiales (ID).

9. Système selon l'une quelconque des revendications de 6 à 8, dans lequel ledit diagramme d'essai d'étalonnage (CT) est généré en fonction d'une ou plusieurs données stockées dans ladite mémoire (11).

10. Système selon l'une quelconque des revendications précédentes, dans lequel ledit diagramme d'essai d'étalonnage (CT) comprend les sections suivantes :
- substrat ;
- pour chaque canal :
une valeur représentative de la quantité maximum d'encre que le système réussit à déposer pour chaque canal individuel ;
des valeurs d'échelle à des pourcentages différents, pour tracer la courbe de teinte de chaque canal individual ;
- combinaison de canaux à 100 %, avec les canaux pris par paires autorisées ;
- combinaison de canaux à 100 %, avec les canaux pris par groupes de trois autorisés ;

11. Système selon l'une quelconque des revendications précédentes, dans lequel ledit appareil serveur (10) est configuré pour générer les paramètres de traitement ou les données d'élaboration (ED) suivants en fonction desdites données initiales (ID) et desdites données de fonctionnement (OD) ;
- courbe spectrale du substrat et des canaux individuels à 100 % ;
- données représentatives de l'homogénéité de reproduction ;
- étendue dynamique d'utilisation de chaque canal individuel ;
- courbe d'étalonnage du système en fonction desdites étendues dynamiques ;
- combinaison de couleurs, par groupes de deux et/ou par groupes de trois, à éliminer ;
- point noir absolu, défini en fonction des combinaisons autorisées de deux et/ou de trois couleurs ;
- seuil maximum pour l'encrage ;
- profil de couleur provisoire,
ledit appareil serveur (10) étant configuré pour déterminer ledit diagramme d'essai xCLR (MT) en fonction desdits paramètres de traitement (ED).

12. Système selon l'une quelconque des revendications précédentes, dans lequel lesdits éléments rigides comprennent une ou plusieurs surfaces parmi les surfaces rigides organiques, inorganiques ou métalliques.

13. Système selon la revendication 12, dans lequel lesdites surfaces comprennent des matériaux en céramique ou en verre ou similaires.

14. Système selon la revendication 12, dans lequel lesdits éléments rigides comprennent des surfaces souples telles que le cuir, rendus rigides par le biais d'un étirage mécanique ou d'autres systèmes comme l'association à des supports rigides.

15. Système selon l'une quelconque des revendications 13 ou 14, dans lequel lesdites surfaces sont des surfaces planaires.
